Europäisches Patentamt

European Patent Office

Office européen des brevets

(19)

(11) Publication number : **0 351 172 B1**

(12) **EUROPEAN PATENT SPECIFICATION**

(45) Date of publication of patent specification :
01.03.95 Bulletin 95/09

(51) Int. Cl.[6] : **G02F 1/03**

(21) Application number : **89306997.1**

(22) Date of filing : **10.07.89**

(54) Optical component or device including a plurality of electrooptic elements.

(30) Priority : **09.07.88 JP 171323/88**

(43) Date of publication of application :
**17.01.90 Bulletin 90/03**

(45) Publication of the grant of the patent :
**01.03.95 Bulletin 95/09**

(84) Designated Contracting States :
**DE FR GB**

(56) References cited :
**EP-A- 0 071 106**
**US-A- 4 077 558**
**PATENT ABSTRACTS OF JAPAN, vol. 6, no.
152 (P-134)[1030], 12th August 1982; & JP-A-57
070 513**
**PATENT ABSTRACTS OF JAPAN, vol. 6, no.
168 (P-139)[1046], 2nd September 1982; &
JP-A-57 086 818**
**Leo Levi "Applied Optics" 1980, John Wiley
and Sons, New York, pages 282-303.**

(56) References cited :
**Physical Review Letters,Vol.8, no.1, 1 January
1962, New York. P.D.Maker et al:"Effects of
Dispersion and Focusing on the Production of
Optical Harmonics", pp 21-22.**

(73) Proprietor : **NGK INSULATORS, LTD.**
**2-56, Suda-cho, Mizuho-ku**
**Nagoya City Aichi Pref. (JP)**

(72) Inventor : **Toyoda, Shuhei**
**25-1 Minamiyama-cho**
**Showa-ku**
**Nagoya-shi Aichi-ken, 466 (JP)**
Inventor : **Takahashi, Akihiro**
**38-2, Ichioka-cho 2-chome**
**Mizuho-ku**
**Nagoya-shi Aichi-ken, 467 (JP)**

(74) Representative : **Paget, Hugh Charles Edward
et al**
**MEWBURN ELLIS**
**York House**
**23 Kingsway**
**London WC2B 6HP (GB)**

## Description

## BACKGROUND OF THE INVENTION

### Field of the Invention

The present invention relates to an optical component using a plurality of light-transmittable elements having an electrooptic effect, and an optical device such as an optical modulator incorporating such an optical component.

### Discussion of the Prior Art

There is known an optical device, for example, a so-called optical modulator, which uses a light-transmittable electrooptic material having an electrooptic effect. A light beam propagated or transmitted through the electrooptic material is modulated by applying a voltage to the electrooptic material. Recently, there is a strong interest in manufacturing such an optical device that permits modulation of light beams having relatively high frequencies, with a relatively low voltage applied to the light-transmittable electrooptic material.

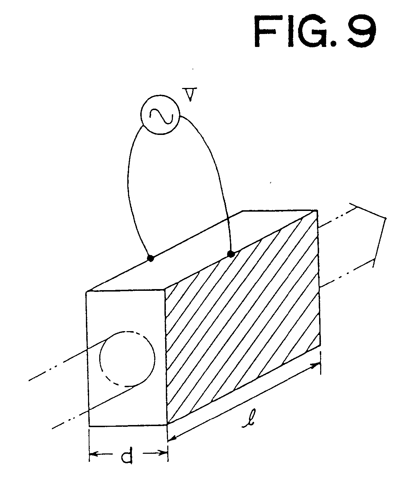

An example of a known transversal type optical modulator is illustrated in Fig. 9, wherein a voltage is applied to the light-transmittable electrooptic element such that an electric field is formed in a direction perpendicular to the direction of incidence of a light beam to be modulated. An optical retardation $\Gamma$ of the light beam transmitted through the electrooptic element is represented by the following formula:

$$\Gamma = \alpha \frac{\ell}{d} V$$

where,

d:  Width of the electrooptic element (Distance between electrodes)

V:  Voltage applied to the electrooptic element

$\ell$:  Length of the electrooptic element (Distance of propagation of the light beam)

$\alpha$:  Proportion constant determined by the properties of the electrooptic element and the wavelength of the incident light beam

It will be understood from the above formula that it is necessary to increase the propagation distance $\ell$ of the light beam, or reduce the electrode-to-electrode distance d of the electrooptic element, in order to obtain a relatively large retardation of the light beam with a relatively low voltage applied to the electrooptic element.

However, the reduction in the electrode-to-electrode distance d for lowering the applied voltage results in reducing the mechanical strength of the electrooptic element, causing easy cracking and difficult processing or handing of the electrooptic element. Further, the electrode-to-electrode distance or width d of the electrooptic element cannot be smaller than the diameter of the incident light beam. In this respect, the amount of reduction in the applied voltage by reducing the distance d is limited, and is not practically sufficient.

On the other hand, the increase in the propagation distance $\ell$ of the light beam to reduce the applied voltage necessarily elongates the electrooptic element. This means a need of preparing an accordingly long mass of a light-transmittable electrooptic material which has uniform properties throughout its entire length. Therefore, this solution is not practically available.

JP-A-57-070513 discloses an optical modulator in which a plurality of light-transmitting media are bonded together with electrodes interposed therebetween. The material used for the media is PLZT.

## SUMMARY OF THE INVENTION

It is therefore an object of the present invention to provide an optical device which permits optical modulation of a light beam having a comparatively large diameter, with a comparatively reduced voltage applied thereto, and which has sufficient mechanical strength and is easy to manufacture and handle.

Another object of the invention is to provide an optical component which may be suitably used for such an optical device as indicated above.

According to one aspect of the present invention, an optical component is provided as specified in claim 1.

According to another aspect of the present invention, an optical device is provided as specified in claim 6.

According to yet another aspect of the present invention, a method of manufacture of the optical component is provided as specified in claim 8.

The optical component according to the present invention may be suitably used to modulate rays of light propagated through the individual constituent light-transmittable elements, when a voltage is applied to the electrically conductive films spaced apart from each other by the light-transmittable element or elements, such that the adjacent light-transmittable elements are exposed to respective electric fields in the opposite directions. Thus, a light beam incident upon the optical component may be modulated by controlling or changing the voltage applied to the optical component. Since the thickness of each of the light-transmittable electrooptic elements bonded together with the electrically conductive films interposed therebetween can be made smaller than that of the conventional single element optical component, the level of the voltage applied to the instant optical component can be lowered to a considerable extent, without increasing the distance of propagation of the light beam, that is, without enlarging the overall size of the optical component.

In the optical component of the invention, the plurality of light-transmittable electrooptic elements are superposed on each other in the direction perpendicular to the direction of incidence of a light beam when the component is used as an optical modulator, for example. The number of the electrooptic elements are determined so as to give the optical component a sufficiently large thickness, while permitting each electrooptic element to have a reduced thickness (i.e., reduced distance between the adjacent electrically conductive films inerposed between the adjacent electrooptic elements). Hence, the present optical component provides sufficient mechanical strength, and does not limit the diameter of an incident light beam, even though the thickness of each light-transmittable electrooptic element or the distance between the electrically conductive films is made small enough to considerably lower the level of the voltage applied to the conductive films.

It will be understood that the use of the relatively thin light-transmittable elements to provide an electrooptic laminar structure having a sufficient thickness makes it possible to effect modulation of a light beam having a comparatively large diameter, with a considerably reduced voltage applied to the laminar structure. With the sufficient thickness of the laminar structure, the instant optical component is durable and easy to handle.

Where the present optical component is used for an optical device, each of the opposite surfaces of each light-transmittable element is coated with the electrically conductive film formed thereon, so that the integral laminar structure of the optical component has opposite outer surfaces which are covered by the respective electrically conductive films formed on the outer surfaces of the outermost light-transmittable elements. To enable this optical component to function as an optical device, the electrically conductive films are connected to a suitable voltage source such that the adjacent light-transmittable elements are exposed to electric fields in the opposite directions.

The light-transmittable elements consist of respective single crystals each of which has electrically conductive films formed on opposite surfaces thereof. The single crystals are diffusion-bonded together by means of the electrically conductive films of the adjacent crystals.

Each of the single crystals as the light-transmittable electrooptic elements may preferably be a single crystal of $LiNbO_3$, $LiTaO_3$, $Bi_{12}SiO_{20}$ or $Bi_{12}GeO_{20}$, or a single crystal of quartz. However, the light-transmittable electrooptic elements are not necessarily be single crystals, but may be polycrystals or may be formed of an organic material.

The light-transmittable elements are usually formed of a transparent or translucent material.

The electrically conductive films of each of the light-transmittable elements may be formed of metallic materials such as Cr, Ti and Au, or ITO films. To avoid attenuation of a light beam while travelling through the optical component, it is desirable that each electrically conductive film has a thickness as small as possible, preferably 2 microns or smaller, and more preferably 0.5 micron. The electrically conductive films may be suitably formed by sputtering or vapor deposition. Usually, the films are formed on the opposite outer surfaces of the optical component which are opposed to each other in the direction in which the light-transmittable elements are superposed on each other.

Usually, the light-transmittable elements with the electrically conductive films formed thereon are superposed on each other, with hydrochloric acid, nitric acid, water or other medium applied to the conductive films, so that the light-transmittable elements are tentatively bonded together. Then, the assembly of the elements is heat-treated at a temperature of about 400-500°C for a suitable length of time. As a result, the light-transmittable elements are diffusion-bonded by means of the electrically conductive films, into an integral laminar structure.

In the case where the assembly of the superposed light-transmittable elements is heat-treated into a physically integrated laminar structure, the heating temperature should be lower than an upper limit above which the electrically conductive films are oxidized.

## BRIEF DESCRIPTION OF THE DRAWINGS

The above and other objects, features and advantages of the present invention will be better understood by reading the following detailed description of presently preferred embodiments of the invention, when considered in connection with the accompanying drawings, in which:

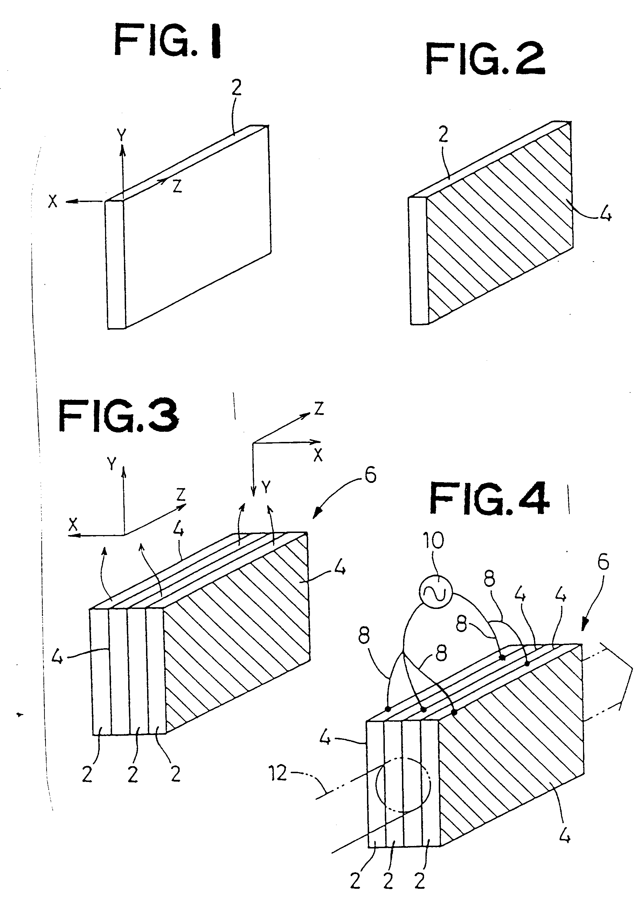

Fig. 1 through Fig. 4 are explanatory views illustrating a process of producing an example of an optical device of the present invention in the form of an optical modulator; Fig. 1 being a perspective view showing a single crystal plate of $LiNbO_3$ as a light-transmittable element having an electrooptic effect, Fig. 2 being a perspective view of the single crystal plate whose opposite major surfaces are coated with chromium layers, Fig. 3 being a perspective view showing an optical component prepared by superposing a plurality of single crystal plates of Fig. 2, and Fig. 4 being a perspective view showing the optical modulator prepared by connecting lead wires to the optical component of Fig. 3;

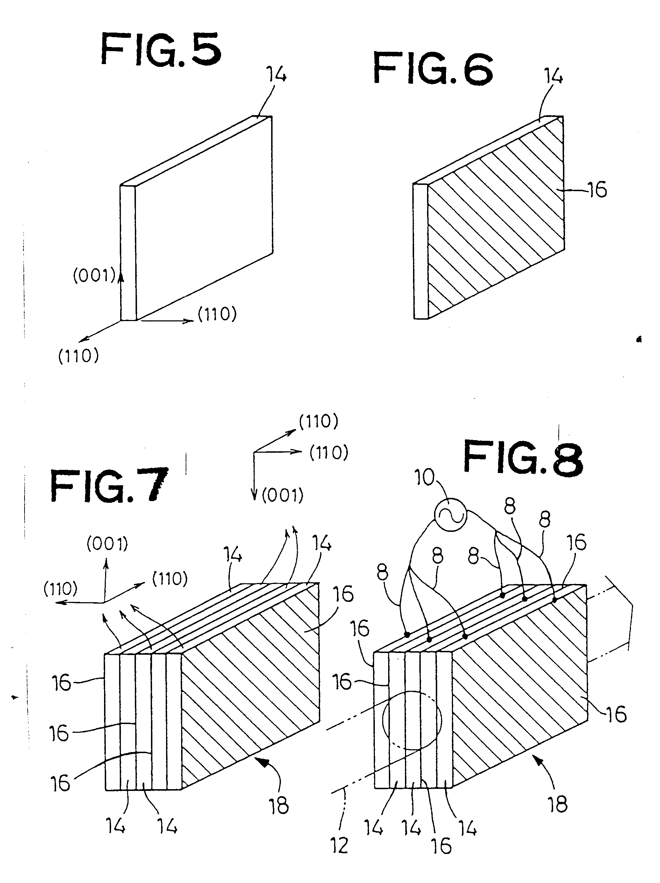

Fig. 5 through Fig. 8 are explanatory views illustrating a process of producing another example of an optical modulator as the optical device of the invention, Fig. 5 being a perspective view of a single crystal plate of $Bi_{12}SiO_{20}$ as a light-transmittable element having an electrooptic effect, Fig. 6 being a perspective view of the single crystal plate of Fig. 5 which is coated with titanium layers, Fig. 7 being a perspective view of an optical component prepared by superposing a plurality of single crystal plates of Fig. 6, and Fig. 8 being a perspective view of the optical modulator prepared by connecting lead wires to the optical component of Fig. 7; and Fig. 9 is a perspective view showing a known horizontal type optical modulator.

## DETAILED DESCRIPTION OF THE PREFERRED EMBODIMENTS

### Example I

Four rectangular single crystal plates 2 one of which is shown in Fig. 1 were prepared as light-transmittable elements having an electrooptic effect, by cutting a single crystal of $LiNbO_3$ which was produced by a Czochralski method. Each single crystal plate 2 has X, Y and Z dimensions of 0.5mm, 10mm and 10mm, respectively, as indicated in Fig. 1. The major surfaces of the plate 2 which are opposed to each other in the X direction were mirror-polished. On these mirror-polished X surfaces, there were formed by sputtering respective electrically conductive films in the form of chromium (Cr) films 4 having a thickness of about 0.5 micron, as indicated in Fig. 2. The thus prepared four single crystal $LiNbO_3$ plates 2 each having the chromium films 4 on its opposite X surfaces were superposed on each other with the chromium films 4 butted together, such that the plates 2 were crystallographically oriented as indicated in Fig. 3. Namely, the differently oriented plates 2 were arranged alternately in the X axis direction, so that the adjacent two plates 2 had the different crystallographic orientations. The thus prepared assembly of the single crystal plates 2 was fixed by a suitable jig.

The assembly of the four superposed single crystal plates 2 was held at 500°C for 4 hours. As a result, the four plates 2 were diffusion-bonded together by means of the chromium films 4. Thus, there was obtained an optical component 6 which has a laminar structure consisting of the four single crystal plates 2 of $LiNbO_3$ crystal plates 2 which are integrally bonded together by means of the chromium films 4, as shown in Fig. 3.

Electrical lead wires 8 were connected to the chromium films 4, and to a power source 10, as shown in Fig. 4, so that the adjacent two single crystal plates 2 were exposed to electric fields in the opposite directions, when a voltage is applied to the chromium films 4. Thus, an optical modulator (6, 8, 10) was prepared.

The optical modulator was positioned such that a laser beam indicated at 12 in Fig. 4 was incident upon the optical component 6 in a direction parallel to the chromium films 4, more precisely, in the Z axis direction of the single crystal plates 2 (perpendicular to the direction in which the plates 2 were superposed on each other). In this condition, a voltage was applied to the optical component 6 so as to modulate the laser beam by 100% while the laser beam was propagated through the optical component 6. A half-wave voltage V was measured when the 100% modulation of the laser beam was obtained. The measured value V $\pi$ was 193 volts.

For comparison, a single crystal of $LiNbO_3$ was cut to prepare a single crystal plate which has X, Y and Z dimensions of 2mm, 10mm and 10mm, respectively, as shown in Fig. 9. Like the single crystal plates 2 described above, the single crystal plate of Fig. 9 was coated at its opposite X surfaces with chromium films in the same manner as described above. The chromium films of the plate were connected to a power source through electrical lead wires, and the thus prepared conventional modulator was tested to measure the half-wave voltage V $\pi$ when the 100% modulation of the laser beam was obtained. The measured half-wave voltage V $\pi$ was 775 volts.

It will be understood from the measurements of the half-wave voltage in the above tests that the optical modulator of Fig. 4 using the optical component 6 of Fig. 3 according to EXAMPLE 1 of the invention permits an optical modulation, with the application of a voltage which is reduced to one fourth of that used in the optical modulator of Fig. 9 using the conventional optical component which has the same external dimensions as the optical component 6.

### Example 2

Five rectangular single crystal plates 14 one of which is shown in Fig. 5 were prepared as light-transmittable elements having an electrooptic effect, by cutting a single crystal of $Bi_{12}SiO_{20}$ which was produced by a Czochralski method. Each single crystal plate 14 has dimensions of 0.4mm, 20mm and 10mm as measured along the crystallographic axes of (110), (001) and (110), respectively, as indicated in Fig. 5. The opposed major (110) surfaces of each plate 14 were mirror-polished. On these mirror-polished (110) surfaces, there were formed by sputtering respective electrically conductive films in the form of titanium (Ti) films 16 having a thickness of about 0.5 micron, as indicated in Fig. 6. The thus prepared five single crystal $Bi_{12}SiO_{20}$ plates 14 each having the titanium films 16 on its opposite (110) surfaces were superposed on each other with the titanium films 16 butted together, such that the plates 14 were crystallographically oriented as indicated in Fig. 7. The thus prepared assembly of the single crystal plates 14 was fixed by a suitable jig.

The assembly of the five superposed single crystal plates 14 was held at 400°C for 2 hours. As a result, the five plates 2 were diffusion-bonded together by means of the titanium films 16. Thus, there was obtained an optical component 18 which has a laminar structure consisting of the five single crystal plates 14 of $Bi_{12}SiO_{20}$ crystal plates 14 which are integrally bonded by means of the titanium films 16, as shown in Fig. 7.

Electrical lead wires 8 were connected to the titanium films 16, and to the power source 10, as shown in Fig. 8, so that the adjacent two single crystal plates 14 were exposed to electric fields in the opposite directions, when a voltage is applied to the titanium films 16. Thus, an optical modulator (18, 8, 10) was prepared.

The optical modulator was positioned such that the laser beam 12 was incident upon the optical component 18 in a direction perpendicular to the direction in which the plates 14 were superposed on each other. In other words, the laser beam 12 was incident in the longitudinal direction of the rectangular optical component 18. In this condition, a voltage was applied to the optical component 18 so as to modulate the laser beam by 100% while the laser beam was propagated through the optical component 18. The half-wave voltage $V\pi$ was measured when the 100% modulation of the laser beam was obtained. The measured value $V \pi$ was 90 volts.

For comparison, a single crystal of $Bi_{12}SiO_{20}$ was cut to prepare a single crystal plate which has dimensions of 2mm, 20mm and 10mm, as measured along the crystallographic axes (110), (001) and (110), respectively. Like the single crystal plates 14 of the optical component 18 described above, the single crystal plate of Fig. 9 was coated at its oppposite (110) surfaces with titanium films in the same manner as described above. The titanium films of the plate were connected to a power source through electrical lead wires, and the thus prepared conventional modulator was tested to measure the half-wave voltage $V \pi$ when the 100% modulation of the laser beam was obtained. The measured half-wave voltage $V \pi$ was 449 volts.

It will be understood from the measurements of the half-wave bolts in the above tests that the optical modulator of Fig. 8 using the optical component 18 of Fig. 7 according to EXAMPLE 2 of the invention permits an optical modulation, with the application of a voltage which is reduced to one fifth of that used in the optical modulator of Fig. 9 using the conventional optical component which has the same external dimensions as the optical element 18.

## Claims

1. An optical component (6) comprising a plurality of light-transmitting elements (2) each having an electrooptic effect, and a plurality of electrically conductive films (4), said light transmitting elements (2) being superposed on each other and together with the electrically conductive films (4), so as to form a laminar structure in which each said light transmitting element (2) is contacted by two said electrically conductive films respectively on its opposite surfaces in the direction of lamination;

characterized in that each said light transmitting elements (2) is a single crystal, the electrically conductive films (4) are deposited on the surfaces of said elements (2) and the single crystals are diffusion-bonded together by means of the electrically conductive films (4).

2. An optical component according to claim 1 wherein said single crystal is of a material selected from $LiNbO_3$, $LiTaO_3$, $Bi_{12} SiO_{20}$, and $Bi_{12} GeO_{20}$.

3. An optical component (6) according to claim 1 or claim 2, wherein said laminar structure has opposite outer surfaces in the direction of superposition of the light transmitting elements (2), which outer surfaces are coated with electrically conductive films (4).

4. An optical component (6) according to any one of claims 1 to 3, wherein each of said electrically conductive films (4) of each of said plurality of light-transmitting elements (2) has a thickness of not larger than 2 microns.

5. An optical component (6) according to any one of the preceding claims, wherein each of said electrically conductive films (4) consists essentially of Cr, Ti or Au.

6. An optical device comprising:
   an optical component (6) according to any one of the preceding claims; a power source (10) for applying a voltage to said optical component while a light beam is propagated through said optical component (6) in a direction parallel to planes of said electrically conductive films (4); and
   said electrically conductive films (4) of said light-transmitting elements (2) being connected to said power source (10) such that, when the power source is on, said adjacent light-transmitting elements (2) are exposed to electric fields in opposite directions.

7. An optical device according to claim 6, wherein said power source (10) is a controlled voltage source so that said light beam incident upon said optical component (6) in said direction is modulatable according to a variation of said controlled voltage.

8. A method of manufacture of an optical component (6) according to claim 1, wherein said plurality of light-transmitting elements (2) are superposed on each other with said electrically conductive films (4) interposed therebetween, so as to form said laminar structure; characterized by depositing said electrically conductive films (4) on the surfaces of said elements (2) and diffusion bonding said light-transmitting elements (2) together by means of the electrically conductive films (4).

9. A method according to claim 8 wherein each of the elements (2) is a single crystal of a material selected from $LiNbO_3$, $LiTaO_3$ $Bi_{12}SiO_{20}$, and $Bi_{12}GeO_{20}$.

10. A method according to claim 8 or claim 9, wherein an electrically conductive film (4) is formed on each of the light transmitting elements (2) on each of its outer surfaces in the direction of superposition of the light transmitting elements (2) prior to diffusion bonding.

11. A method according to claim 10 wherein said electrically conductive films (4) formed on the outer surfaces in the direction of superposition of the light transmitting elements (2) has a thickness of not larger than 2 μm.

12. A method according to any one of claims 8 to 11 wherein the diffusion bonding is carried out at a temperature between 400°C and 500°C.

**Patentansprüche**

1. Optischer Bauteil (6), umfassend eine Vielzahl an lichtübertragenden Elementen (2), von denen jedes einen elektrooptischen Effekt aufweist, und eine Vielzahl an elektrisch leitenden Filmen (4), wobei die lichtübertragenden Elemente (2) zusammen mit den elektrisch leitenden Filmen (4) so übereinandergelegt sind, daß eine Laminarstruktur gebildet wird, in der jedes lichtübertragende Element (2) in Richtung der Laminierung von zwei elektrisch leitenden Filmen an seinen gegenüberliegenden Oberflächen kontaktiert wird, dadurch gekennzeichnet, daß jedes lichtübertragende Element (2) ein Einkristall ist, daß die elektrisch leitenden Filme (4) auf den Oberflächen der Elemente (2) abgelagert sind und daß die Einkristalle durch Diffusionsbindung durch die elektrisch leitenden Filme (4) miteinander verbunden sind.

2. Optischer Bauteil nach Anspruch 1, worin der Einkristall aus einem der Materialien $LiNbO_3$,

$LiTaO_3$, $Bi_{12}SiO_{20}$ und $Bi_{12}GeO_{20}$ ausgewählt ist.

3. Optischer Bauteil (6) nach Anspruch 1 oder 2, worin die Laminarstruktur einander gegenüberliegende Außenflächen in der Übereinanderlegerichtung der lichtübertragenden Elemente (2) aufweist, wobei die Außenflächen mit elektrisch leitenden Filmen (4) beschichtet sind.

4. Optischer Bauteil (6) nach einem der Ansprüche 1 bis 3, worin jeder elektrisch leitende Film (4) der Vielzahl an lichtübertragenden Elemente (2) eine Dicke von nicht mehr als 2 μm aufweist.

5. Optischer Bauteil (6) nach einem der vorhergehenden Ansprüche, worin jeder elektrisch leitende Film (4) im wesentlichen aus Cr, Ti oder Au besteht.

6. Optische Einrichtung, umfassend:
einen optischen Bauteil (6) nach einem der vorhergehenden Ansprüche; eine Energiequelle (10) zum Anlegen einer Spannung an den optischen Bauteil, während ein Lichtstrahl durch den optischen Bauteil (6) in einer Richtung parallel zu Ebenen der elektrisch leitenden Filme (4) hindurchgeschickt wird; und
wobei die elektrisch leitenden Filme (4) der lichtübertragenden Elemente (2) mit der Energiequelle (10) verbunden sind, sodaß, wenn die Energiequelle eingeschaltet ist, die benachbarten lichtübertragenden Elemente (2) elektrischen Feldern in umgekehrten Richtungen ausgesetzt sind.

7. Optische Einrichtung nach Anspruch 6, worin die Energiequelle (10) eine geregelte Spannungsquelle ist, sodaß der in der genannten Richtung auf den optische Bauteil (6) auftreffende Lichtstrahl durch Variieren der geregelten Spannung modulierbar ist.

8. Verfahren zur Herstellung eines optischen Bauteils (6) nach Anspruch 1, worin die Vielzahl an iichtübertragenden Elementen (2) mit dazwischen angeordneten elektrisch leitenden Filmen (4) übereinandergelegt sind, um die Laminarstruktur zu bilden; gekennzeichnet durch das Ablagern der elektrisch leitenden Filme (4) auf den Oberflächen der Elemente (2) und das Diffusionsbinden der lichtübertragenden Elemente (2) aneinander mittels der elektrisch leitenden Filme (4).

9. Verfahren nach Anspruch 8, worin jedes der Elemente (2) ein Einkristall aus einem der Materialien $LiNbO_3$, $LiTaO_3$, $Bi_{12}SiO_{20}$ und $Bi_{12}GeO_{20}$ ist.

**10.** Verfahren nach Anspruch 8 oder 9, worin ein elektrisch leitender Film (4) auf jedem der lichtübertragenden Elemente (2) auf jeder seiner Außenflächen in Übereinanderlegerichtung der lichtübertragenden Elemente (2) vor dem Diffusionsbinden gebildet wird.

**11.** Verfahren nach Anspruch 10, worin der auf den Außenflächen der lichtübertragenden Elemente (2) in der Übereinanderlegerichtung gebildete elektrisch leitende Film (4) eine Dicke von nicht mehr als 2 μm aufweist.

**12.** Verfahren nach einem der Ansprüche 8 bis 11, worin das Diffusionsbinden bei einer Temperatur zwischen 400°C und 500°C durchgeführt wird.

**Revendications**

**1.** Composant optique (6) comprenant une pluralité d'éléments transmettant de la lumière (2) ayant chacun un effet électro-optique, et une pluralité de films conducteurs électriquement (4), lesdits éléments transmettant la lumière (2) étant superposés les uns sur les autres et avec les films conducteurs électriquement (4), de façon à former une structure laminaire dans laquelle chaque élément transmettant la lumière (2) est en contact, par deux desdits films conducteurs électriquement, respectivement, sur ses surfaces opposées dans la direction des lames, caractérisé en ce que chacun desdits éléments transmettant la lumière (2) est un monocristal, les films conducteurs électriquement (4) sont déposés sur les surfaces desdits éléments (2) et les monocristaux sont reliés par diffusion les uns aux autres, au moyen des films conducteurs électriquement (4).

**2.** Composant optique selon la revendication 1, dans lequel ledit monocristal est en un matériau choisi parmi $LiNbO_3$, $LiTaO_3$, $Bi_{12}SiO_{20}$ et $Bi_{12}GeO_{20}$.

**3.** Composant optique (6) selon la revendication 1 ou 2, dans lequel ladite structure laminaire a des surfaces externes opposées, dans la direction de la superposition des éléments transmettant la lumière (2) dont les surfaces externes sont revêtues de films électriquement conducteurs (4).

**4.** Composant optique (6) selon l'une quelconque des revendications 1 à 3, dans lequel chacun desdits films conducteurs électriquement (4) de chacun desdits éléments transmettant la lumière (2) a une épaisseur ne dépassant pas 2 microns.

**5.** Composant optique (6) selon l'une quelconque des revendications précédentes, dans lequel chacun desdits films conducteurs électriquement (4) consiste essentiellement en Cr, Ti ou Au.

**6.** Dispositif optique comprenant :
un composant optique (6) selon l'une quelconque des revendications précédentes, une source d'énergie (10) pour appliquer une tension audit composant optique, tandis qu'un faisceau lumineux se propage à travers ledit composant optique (6), dans une direction parallèle aux plans desdits films conducteurs électriquement (4) : et
lesdits films conducteurs électriquement (4) desdits éléments transmettant la lumière (2) étant reliés à ladite source d'énergie (10) de façon que, lorsque la source d'énergie est en fonctionnement, lesdits éléments adjacents transmettant la lumière (2) soient exposés aux champs électriques dans des directions opposées.

**7.** Dispositif optique selon la revendication 6, dans lequel ladite source d'énergie (10) est une source de tension commandée de façon que ledit faisceau électrique incident sur ledit composant optique (6) dans ladite direction, soit modulable, conformément à une variation de ladite tension commandée.

**8.** Procédé de fabrication d'un composant optique (6) selon la revendication 1, dans lequel ladite pluralité d'éléments transmettant la lumière (2) a ses éléments superposés les uns sur les autres, avec lesdits films conducteurs électriquement (4) interposés entre eux, de façon à former ladite structure laminaire ; caractérisé par l'étape consistant à déposer lesdits films conducteurs électriquement (4) sur les surfaces desdits éléments (2) et la liaison par diffusion desdits éléments transmettant la lumière (2) les uns aux autres, au moyen des films électriquement conducteurs (4).

**9.** Procédé selon la revendication 8, dans lequel chacun des éléments (2) et un monocristal d'un matériau choisi parmi $LiNbO_3$, $LiTaO_3$, $Bi_{12}SiO_{20}$ et $Bi_{12}GO_{20}$.

**10.** Procédé selon la revendication 8 ou 9, dans lequel un film électriquement conducteur (4) est formé sur chacun des éléments transmettant la lumière (2), sur chacune de leurs surfaces externes, dans la direction de superposition des éléments transmettant la lumière (2), avant la liaison par diffusion.

11. Procédé selon la revendication 10, dans lequel lesdits films électriquement conducteurs (4), formés sur les surfaces externes dans la direction de superposition des éléments transmettant la lumière (2), a une épaisseur ne dépassant pas 2 μm.

12. Procédé selon l'une quelconque des revendications 8 à 11, dans lequel la liaison par diffusion est réalisée à une température située entre 400°C et 500°C.

# FIG. 1

# FIG.2

# FIG.3

# FIG.4

# FIG.5

14

(001)

(110)

(110)

# FIG.6

14

16

# FIG.7

(110)
(110)
(001)

(001)

(110)    (110)

14
14
16

16

16

16

14    14

18

# FIG.8

10

8    8

8    8

8

16

16

16

16

16

12    14    14    14    16

18

# FIG. 9